(19) Europäisches Patentamt
European Patent Office
Office européen des brevets

(11) **EP 3 270 625 B1**

(12) **EUROPEAN PATENT SPECIFICATION**

(45) Date of publication and mention of the grant of the patent:
**03.07.2019 Bulletin 2019/27**

(51) Int Cl.:
**H04W 74/08** *(2009.01)*     *H04W 72/04* *(2009.01)*

(21) Application number: **16290137.5**

(22) Date of filing: **15.07.2016**

(54) **MANAGING MEDIUM ACCESS OF AN ACCESS POINT AND ASSOCIATED DEVICES IN A WIRELESS NETWORK**

VERWALTUNG DES MEDIUMZUGANGS EINES ZUGANGSPUNKTES UND ZUGEHÖRIGE VORRICHTUNGEN IN EINEM DRAHTLOSNETZWERK

GESTION DE SUPPORT D'ACCÈS D'UN POINT D'ACCÈS ET DISPOSITIFS ASSOCIÉS DANS UN RÉSEAU SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.01.2018 Bulletin 2018/03**

(73) Proprietor: **Alcatel Lucent**
**91620 Nozay (FR)**

(72) Inventors:
• **Gacanin, Haris**
  **2018 Antwerpen (BE)**
• **Rostami, Soheil**
  **2018 Antwerpen (BE)**

(74) Representative: **IP HILLS NV**
**Hubert Frère-Orbanlaan 329**
**9000 Gent (BE)**

(56) References cited:
**WO-A1-2009/146342**     **WO-A1-2015/127382**
**US-A1- 2013 182 610**

• **ALCATEL-LUCENT SHANGHAI BELL ET AL: "Remaining details of single-carrier LBT", 3GPP DRAFT; R1-155625 - SINGEL-CARRIER LBT FOR LAA - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Malmö, Sweden; 20151005 - 20151009 4 October 2015 (2015-10-04), XP051039699, Retrieved from the Internet: URL:http://www.3gpp.org/ftp/Meetings_3GPP_ SYNC/RAN1/Docs/ [retrieved on 2015-10-04]**

## Description

### Technical Field

The present disclosure relates to the field of medium access control of an access point and associates devices in a wireless network.

### Background

A wireless access point, AP, and associated devices, also named stations or STAs, operating according to the IEEE 802.11 Wi-Fi standard, are by default assigned the same access priority regarding a channel used to send and to receive frames.

More particular, IEEE 802.1e, which is an approved amendment to the IEEE 802.11 Wi-Fi standard, provides prioritized quality of service, QoS, through enhanced distributed channel access, EDCA. Each node, STA and AP, senses the channel in order to determine if a frame can be sent. This will be the case if the channel is idle for a particular time equal to an arbitrary inter-frame space, AIFS. If the channel is busy, a node selects a back off period uniformly distributed between zero and a contention window, CW, wherein CW is initially set to a minimum value, $CW_{min}$, and doubled every transmission failure until it reaches a predefined maximum value, $CW_{max}$.

### Summary

By the above scheme, a same access priority is achieved in the media access control, MAC, layer for the AP and STAs, i.e., in terms of the average time of granted transmission over a sufficiently long interval. When, for example, voice-over-WiFi (VoWiFi) applications are running on the STAs, each node approximately demands an equal amount of transmission time for upstream and downstream frames. When a STA runs such a VoWiFi application, it will upstream frames when speaking, while for listening to a reply a downstream of frames is needed. However, STAs using VoWiFi applications will thus send upstream frames when speaking and an AP will send downstream frames for listening at the STAs, while all the nodes have an equal amount of transmission time. Hence, a fair share of bandwidth between upstream and downstream is not achieved since each individual downstream gets comparably lower bandwidth than each individual upstream gets. There is thus an unfairness in the access priority for the upstream and downstream. Another drawback of using the same medium access parameters for each node is that it is unable to react to different load and/or traffic situations.

It is an objective of the present disclosure to alleviate the above drawbacks and to provide a solution with an improved fairness between upstream and downstream.

This object is achieved, in a first aspect, by a networking device for managing medium access of an AP and STAs in a wireless network, the device comprising an observation module configured to receive performance parameters from the AP and the STAs; and a calculation module configured to calculate from the performance parameters a fairness indicator indicative for the difference between medium access obtained for downstream and upstream frames; and an assigning module configured to change medium access parameters of the STAs and/or the AP based on the fairness indicator.

Thus, prior to changing medium access parameters of STAs and/or an AP, an observation module receives performance parameters from each node in the wireless network. These performance parameters are then used by a calculation module to calculate a fairness indicator which represents a difference between medium access for downstream and upstream frames per node. If an STA sends data packets to the AP this is regarded as upstream, while if an AP send data packets to one or more STAs, this is regarded as downstream. Finally, based on this fairness indicator, an assigning module may change medium access parameters of STAs and/or an AP.

Since different load and/or traffic situations in a wireless network can occur, a fairness indicator detects a potential unbalance between upstream and downstream channel access per node. Since medium access parameters are changed based on this fairness indicator, this unbalance is resolved.

According to an aspect the performance parameters are indicative for the amount of sent and discarded frames by the STAs and the AP.

In other words, for each node in the wireless network, the frames which are sent as well as those who are discarded are measured. A reason for discarding frames could be to free up MAC layer buffer space, i.e. these frames are prevented from being transmitted even though no errors are detected. Since the sent as well as the discarded frames are measured, it is an advantage that a degradation of the QoS is identified even if no transmission errors have occurred.

According to an aspect the fairness indicator is indicative for the difference between the amount of discarded frames by the AP relative to the amount of sent frames by the AP and an average amount of discarded frames by the STAs relative to an average amount of sent frames by the STAs.

The relation between sent and discarded frames for the AP is calculated and a similar calculation is performed for the STAs. The fairness indicator is thus indicative for the difference between the two calculated relations.

Since the unfairness in the access priority is regarded from the point of view for the AP on the one hand and from the point of view for the STAs on the other hand, it is an advantage to calculate the relation of sent and discarded frames from AP respectively STAs separately.

According to an aspect, medium access parameters comprise a length of a contention window, CW, of a STA and/or an AP.

If a node fails to transmit a frame due to a busy channel, it will select a back off interval uniformly distributed between zero and a CW after which it will retry to transmit again. By changing the length of a CW, the time until a node will retry to transmit can be influenced, thus managing the nodes such that a fair share of bandwidth between upstream and downstream is achieved. The CW thus allows changing the fairness in an easy and standardized way.

According to an aspect, the calculation module is further configured to calculate a minimum and maximum for the length of the CW of a STA and/or AP.

A minimum contention window $CW_{min}$ is the initial CW set when a node enters a back off period. Next, the CW is doubled after every consecutive time the node reenters the back off period until the CW reaches a maximum contention window $CW_{max}$. The calculation module is thus configured to calculate such a $CW_{min}$ and $CW_{max}$ for each node in the wireless network.

The advantage that a $CW_{min}$ respectively a $CW_{max}$ is calculated separately for each node in the wireless network is that it may better react to changing load and/or traffic situations in the network.

According to an aspect the minimum length of a CW is based on a minimum default value of the CW and on the fairness indicator.

This means, in order to calculate $CW_{min}$ not only a minimum default value is used but also the fairness indicator.

The fairness indicator is indicative for the difference between medium access obtained for downstream and upstream frames and changes when different conditions in the wireless network occur. It is therefore an advantage to use this indicator combined with a minimum default value in order to calculate $CW_{min}$, since therefore changing loads and/or traffic in the wireless network are taken into account, while at the same time a minimum value is safeguarded. Additionally, the magnitude of the unfairness is also taken into account since this is expressed by the fairness indicator as well.

According to an aspect, the maximum length of a CW is based on the minimum contention window of the AP.

For each node in the wireless network, an AP and/or STAs, a $CW_{min}$ as well as a $CW_{max}$ can be defined. As for a STA the $CW_{max}$ will be thus calculated using the $CW_{min}$ of the AP.

Since an unfair share of bandwidth between upstream and downstream occurs because an AP respectively an STA handles these operations in a reverse way, it is an advantage to use $CW_{min}$ of the AP to calculate $CW_{max}$ of an STA because then this different approach of these two type of nodes is taken into account. Furthermore, another advantage is that the access of an STA to transmit frames is adapted to that of the access of an AP.

According to a second aspect the disclosure relates to a method for managing medium access of an access point, AP, and associated devices, STAs, in a wireless network, the method comprising receiving performance parameters from the AP and the STAs; and calculating from the performance parameters a fairness indicator indicative for the difference between medium access obtained for downstream and upstream frames; and changing medium access parameters of the STAs and/or the AP based on the fairness indicator.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

## Brief Description of the Drawings

Fig. 1 illustrates a wireless network comprising a networking device for managing medium access, an access point and associated devices according to an embodiment of the disclosure; and

Fig. 2 illustrates a networking device for managing medium access comprising an observation module, a calculation module and an assigning module according to an embodiment of the disclosure; and

Fig. 3 illustrates steps performed by a networking device for identifying an unbalance of downstream and upstream in a wireless network according to an embodiment of the disclosure; and

Fig.4 illustrates steps performed by a networking device to manage medium access parameters of associated devices according to an embodiment of the disclosure.

Fig. 5 illustrates a suitable computing system for performing steps according to various embodiments of the invention.

## Detailed Description of Embodiment(s)

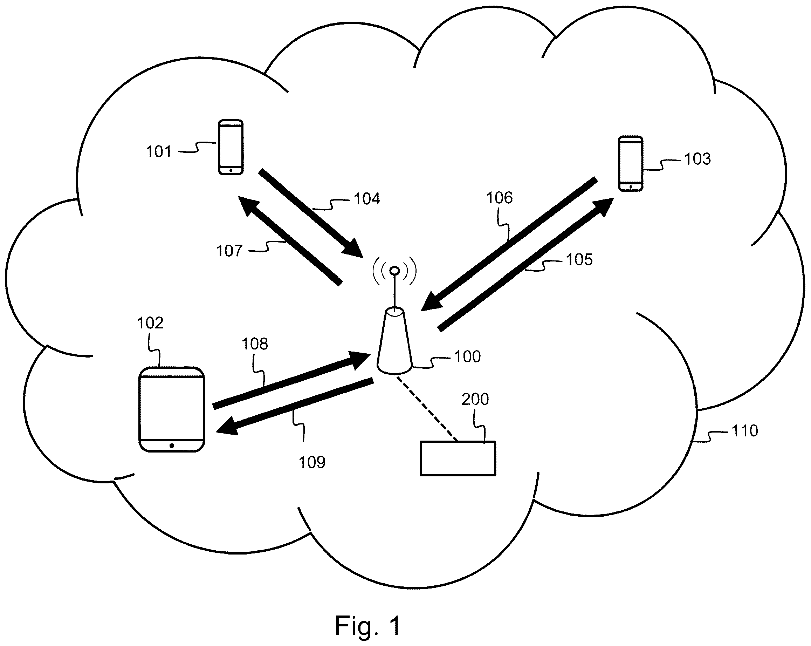

According to an embodiment, the disclosure relates to a device for managing medium access parameters of an access point (AP) and associated devices (STAs) in a wireless network. Figure 1 illustrates such a wireless network 110, comprising such a device for managing medium access parameters 200, an AP 100 and STAs 101, 102 and 103. The AP 100 can be used for example for a Wireless Local Area Network (WLAN), while the STAs are for example a smartphone 101, 103 or a tablet 102. The AP 100 and the STAs 101, 102 and 103 will exchange frames. The STAs 101, 102 and 103 will upstream frames to the AP 100, illustrated by 104, 106 and 108 for 101, 103 respectively 102, while the AP 100 will downstream frames to the STAs, illustrated by 105, 107 and 109. The exchange of frames between the AP and the STAs can for example occur when using voice-over-WiFi (VoWiFi) applications in the STAs.

Since however the AP 100 and the STAs 101, 102 and 103 share the same channel in order to operate, downstream and upstream cannot occur simultaneously. Each node, the AP and the STAs, in the wireless network 110, senses the channel to determine if a frame can be sent. This will be the case if the channel is idle for a particular time equal to an arbitrary inter-frame space (AIFS). If the channel is busy, a node selects a back off period. According to an embodiment of the disclosure, this back off period is managed by the device for managing medium access parameters 200.

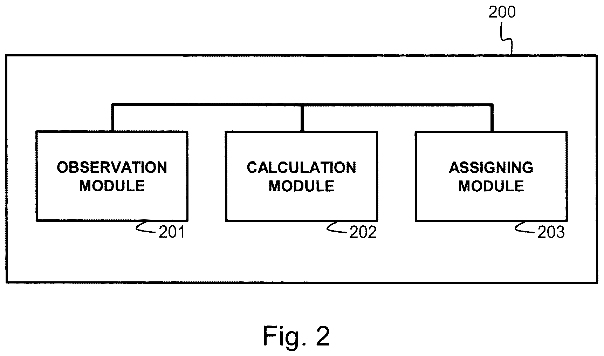

Figure 2 illustrates such a device for managing medium access of the AP 100 and STAs 101, 102 and 103 according to an embodiment of the disclosure. The device 200 comprises an observation module 201, a calculation module 202 and an assigning module 203. According to an embodiment of the disclosure, the device 200 can also be incorporated in the access point 100.

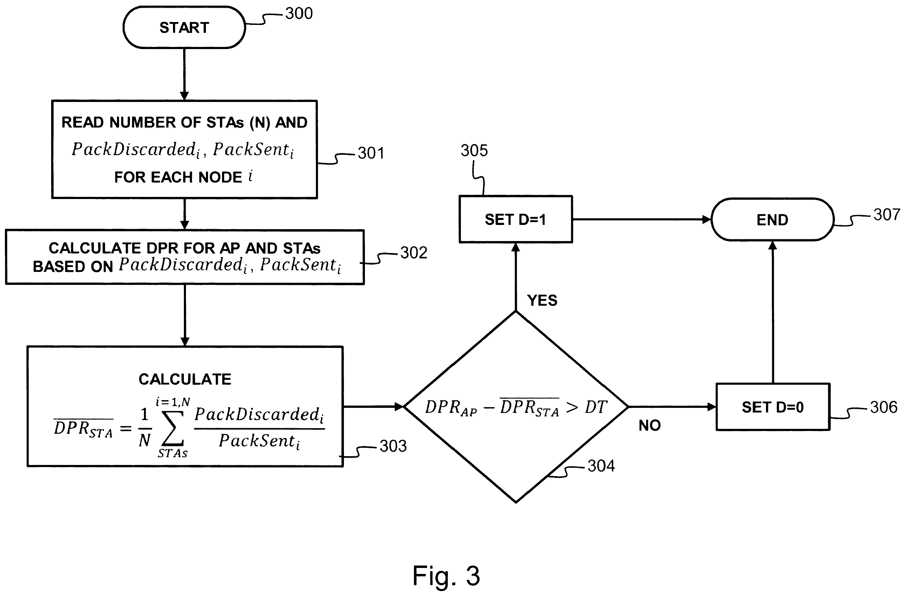

According to an aspect, the observation module 201 is configured to receive performance parameters from the AP 100 and the STAs 101, 102 and 103. Based on these performance parameters, a calculation module 202 will calculate a fairness indicator. Figure 3 illustrates the step performed by the observation module 201 to receive performance parameters and the calculation module 202 to calculate such a fairness indicator according to an embodiment of the disclosure. At the start 300 the observation module will read 301 during an observation time slot the number of STAs, equal to N, and will measure the sent as well as the discarded frames for each STA 101, 102 and 103 and for the AP 100, represented as $PackSent_i$ respectively $PackDiscarded_i$ for node $i$. In the next step, the calculation module 202 calculates 302 the ratio of discarded frames over sent frames per node, yielding a discarded packet ratio $DPR$ per node, or

$$DPR_i = \frac{PackDiscarded_i}{PackSent_i} \text{ (Eq.1).}$$

The discarded packet ratio for the AP 100 is thus expressed as $DPR_{AP}$, while for the STAs 101, 012 and 103 this becomes $DPR_{STA_i}$ with $i$ varying from 1 to N, with N the number of STAs. Subsequently, the calculation module 202 will in the next step calculate 303 the average $DPR$ for all the STAs, expressed as $\overline{DPR_{STA}}$ as follows,

$$\overline{DPR_{STA}} = \frac{1}{N} \sum_{STAs}^{i=1,N} \frac{PackDiscarded_i}{PackSent_i} \text{ (Eq. 2).}$$

Next, The calculation module 202 calculates a fairness indicator based on the $\overline{DPR_{STA}}$ of the STAs and that of the AP $DPR_{AP}$. The difference between $DPR_{AP}$ and $\overline{DPR_{STA}}$, which equals to the fairness indicator, is compared 304 in a next step with a threshold DT, indicative for the fairness between upstream and downstream in the wireless network 110. This threshold can for example be 0.01. If the fairness indicator is greater than the threshold DT, a flag D is set 305 at 1, while in the other case the flag D is set 304 at 0. After the flag D is set to 1 or 0, thus depending on the fairness indicator and the threshold DT, the calculation module 202 ends 307 his calculations.

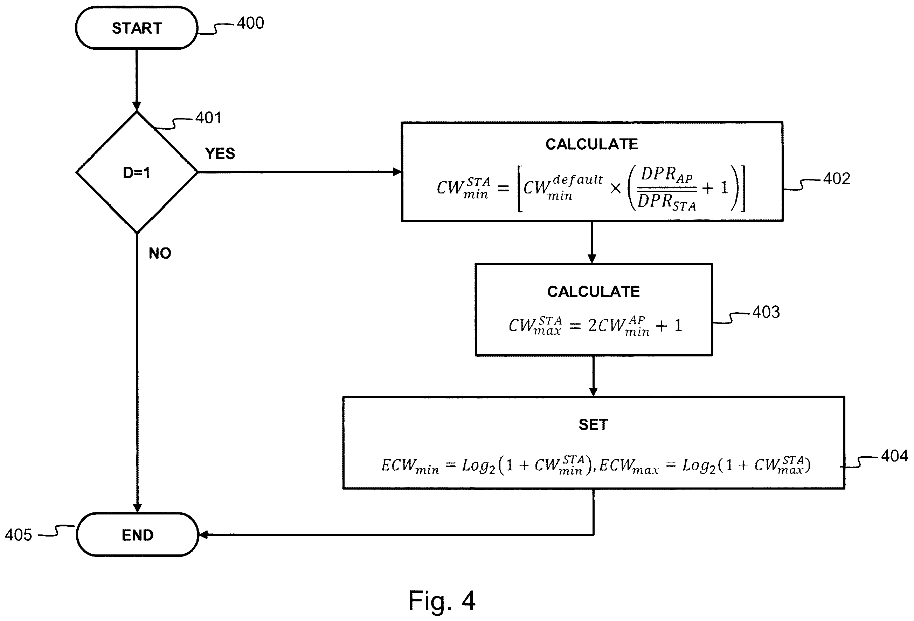

In a next module of the device for managing medium access 200, an assigning module 203 will change medium access parameters of the AP 100 and the STAs 101, 102 and 103 in the wireless network 110. According to an embodiment, the assigning module 203 will calculate these medium access parameters prior to changing them. Figure 4 is an illustration of the steps performed to calculate and consequently change these parameters.

At the start 400, the assigning module 203 verifies 401 if the flag D is set at 1. If not, the assigning module 203 will not change the medium parameters and ends 405 his operation. If the flag is set at 1, in the next step the assigning module calculates 402 a minimum contention window $CW_{min}^{STA}$ for the STAs according to an embodiment of the disclosure. This minimum contention window $CW_{min}^{STA}$ is calculated 402 by use of a minimum default value $CW_{min}^{default}$ for the contention window and can be for example 2. The fairness indicator is also taken into account, since $DPR_{AP}$ as well as $DPR_{STA}$ are used to calculate a minimum contention window $CW_{min}^{STA}$. The following equation is used to calculate 402 the minimum contention window $CW_{min}^{STA}$ for the STAs,

$$CW_{min}^{STA} = \left[ CW_{min}^{default} \times \left( \frac{DPR_{AP}}{DPR_{STA}} + 1 \right) \right] \text{(Eq. 3)},$$

wherein [ ] is the floor function.

In the following step, the assigning module 203 calculates 403 a maximum contention window $CW_{max}^{STA}$ for the STAs according to an embodiment of the disclosure. This maximum contention window $CW_{max}^{STA}$ is calculated 403 by taking the minimum contention window of the AP $CW_{min}^{AP}$ into account. According to an embodiment, the following equation is used to calculate 402 the maximum contention window for the STAs,

$$CW_{max}^{STA} = 2CW_{min}^{AP} + 1 \text{ (Eq. 4)}.$$

The calculated values $CW_{min}^{STA}$ and $CW_{max}^{STA}$ are in the next step used to set 404 the medium access parameters of the STAs. For each value 1 is added and the binary logarithm is calculated of these sums, or

$$ECW_{min} = Log_2 \left( 1 + CW_{min}^{STA} \right) \text{ (Eq. 5)},$$

$$ECW_{max} = Log_2 \left( 1 + CW_{max}^{STA} \right) \text{ (Eq. 6)}.$$

The parameters $ECW_{min}$ and $ECW_{max}$ are the medium access parameters for the STAs set 404 by the assigning module 203. After the medium access parameters are set 404 by the assigning module 203 in the device for managing medium access parameters 200, it ends 405 his operation.

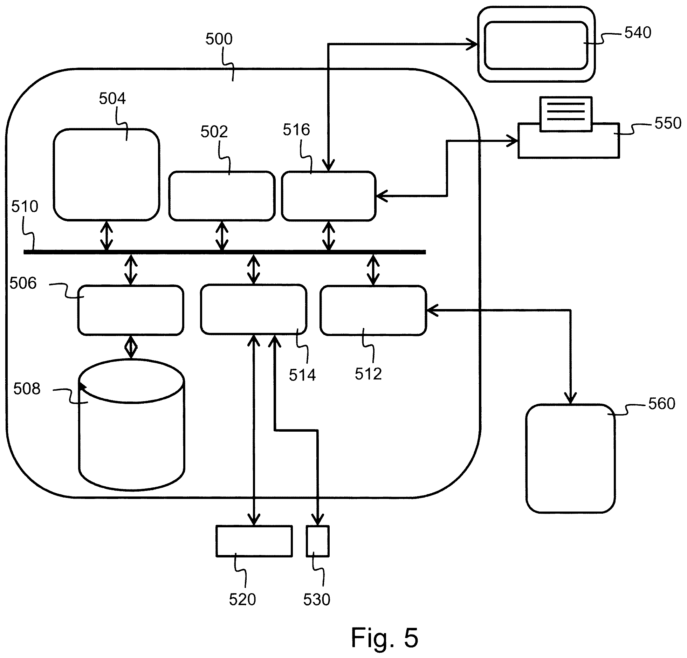

Fig. 5 shows a suitable computing system 500 for performing the steps according to the above embodiments. Computing system 500 may be used as a networking device 200 for managing medium access parameters of an AP 100 and STAs 101, 102 and 103. Computing system 500 may in general be formed as a suitable general purpose computer and comprise a bus 510, a processor 502, a local memory 504, one or more optional input interfaces 514, one or more optional output interfaces 516, a communication interface 512, a storage element interface 506 and one or more storage elements 508. Bus 510 may comprise one or more conductors that permit communication among the components of the computing system 500. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator to input information to the computing device 500, such as a keyboard 520, a mouse 530, a pen, voice recognition and/or biometric mechanisms, etc. Output interface 516 may comprise one or more conventional mechanisms that output information to the operator, such as a display 540, etc. Communication interface 512 may comprise any transceiver-like mechanism such as for example one or more Ethernet interfaces that enables computing system 500 to communicate with other devices and/or systems 560. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 500 described above can also run as a virtual machine above the physical hardware.

**Claims**

1. A networking device (200) for managing medium access of an access point, AP, (100) and associated devices, STAs, (101, 102, 103) in a wireless network (110), the device (200) comprising:

   - an observation module (201) configured to receive performance parameters from the AP (100) and the STAs (101, 102, 103); and
   - a calculation module (202) configured to calculate from the performance parameters a fairness indicator indicative for the difference between medium access obtained for downstream and upstream frames; and
   - an assigning module (203) configured to change medium access parameters of the STAs (101, 102, 103) and/or the AP (100) based on the fairness indicator.

2. Device (200) according to claim 1, wherein the performance parameters are indicative for the amount of sent and discarded frames by the STAs (101, 102, 103) and the AP (100).

3. Device (200) according to claim 2, wherein the fairness indicator is indicative for the difference between the amount of discarded frames by the AP (100) relative to the amount of sent frames by the AP (100) and an average amount of discarded frames by the STAs relative to an average amount of sent frames by the STAs (101, 102, 103).

4. Device (200) according to claim 1, wherein medium access parameters comprise a length of a contention window, CW, of a STA (101, 102, 103) and/or an AP (100).

5. Device (200) according claim 4, wherein the calculation module (201) is further configured to calculate a minimum and maximum for the length of the contention window, CW, of a STA (101, 102, 103) and/or AP (100).

6. Device (200) according to claim 5, wherein the minimum length of a CW is based on a minimum default value of the CW and on the fairness indicator.

7. Device (200) according to claim 5, wherein the maximum length of a CW is based on the minimum contention window of the AP (100).

8. Method for managing medium access of an access point, AP, and associated devices, STAs, in a wireless network, the method comprising:

   - receiving (301) performance parameters from the AP and the STAs; and
   - calculating (302, 303, 304) from the performance parameters a fairness indicator indicative for the difference between medium access obtained for downstream and upstream frames; and
   - changing (404) medium access parameters of the STAs and/or the AP based on the fairness indicator.

9. A computer program product comprising computer-executable instructions for performing the method according to claim 8 when the program is run on a computer.

10. A computer readable storage medium comprising the computer product according to claim 9.

**Patentansprüche**

1. Vernetzungsvorrichtung (200) zum Verwalten von Mediumzugang eines Zugangspunkts AP (100) und zugeordneter Vorrichtungen STA (101, 102, 103) in einem drahtlosen Netzwerk (110), wobei die Vorrichtung (200) Folgendes umfasst:

- ein Beobachtungsmodul (201), ausgelegt zum Empfangen von Leistungsfähigkeitsparametern von dem AP (100) und den STA (101, 102, 103); und

- ein Berechnungsmodul (202), ausgelegt zum Berechnen eines Fairnessindikators aus den Leistungsfähigkeitsparametern, der die Differenz zwischen für Downstream- und Upstream-Rahmen erhaltenem Mediumzugang angibt; und

- ein Zuweisungsmodul (203), ausgelegt zum Ändern von Mediumzugangsparametern der STA (101, 102, 103) und/oder des AP (100) auf der Basis des Fairnessindikators.

2. Vorrichtung (200) nach Anspruch 1, wobei die Leistungsfähigkeitsparameter die Menge gesendeter und verworfener Rahmen durch die STA (101, 102, 103) und den AP (100) angeben.

3. Vorrichtung (200) nach Anspruch 2, wobei der Fairnessindikator die Differenz zwischen der Menge verworfener Rahmen durch den AP (100) relativ zu der Menge gesendeter Rahmen durch den AP (100) und eine mittlere Menge verworfener Rahmen durch die STA relativ zu einer mittleren Menge gesendeter Rahmen durch die STA (101, 102, 103) angibt.

4. Vorrichtung (200) nach Anspruch 1, wobei die Mediumzugangsparameter eine Länge eines Konkurrenzfensters CW einer STA (101, 102, 103) und/oder eines AP (100) umfassen.

5. Vorrichtung (200) nach Anspruch 4, wobei das Berechnungsmodul (201) ferner ausgelegt ist zum Berechnen eines Minimums und Maximums für die Länge des Konkurrenzfensters CW einer STA (101, 102, 103) und/oder eines AP (100).

6. Vorrichtung (200) nach Anspruch 5, wobei die Mindestlänge eines CW auf einem Mindestvorgabewert des CW und auf dem Fairnessindikator basiert.

7. Vorrichtung (200) nach Anspruch 5, wobei die Maximallänge eines CW auf dem Mindestkonkurrenzfenster des AP (100) basiert.

8. Verfahren zum Verwalten von Mediumzugang eines Zugangspunkts AP und zugeordneter Vorrichtungen STA in einem drahtlosen Netzwerk, wobei das Verfahren Folgendes umfasst:

- Empfangen (301) von Leistungsfähigkeitsparametern von dem AP und den STA; und
- Berechnen (302, 303, 304) eines Fairnessindikators aus den Leistungsfähigkeitsparametern, der die Differenz zwischen für Downstream- und Upstream-Rahmen erhaltenen Mediumzugang angibt; und
- Ändern (404) von Mediumzugangsparametern der STA und/oder des AP auf der Basis des Fairnessindikators.

9. Computerprogrammprodukt mit computerausführbaren Anweisungen zum Ausführen des Verfahrens nach Anspruch 8, wenn das Programm auf einem Computer laufengelassen wird.

10. Computerlesbares Speicherungsmedium, das das Computerprodukt nach Anspruch 9 umfasst.

**Revendications**

1. Dispositif réseautage (200) pour gérer l'accès à un support d'un point d'accès, AP, (100) et de dispositifs associés, STA, (101, 102, 103) dans un réseau sans fil (110), le dispositif (200) comprenant :

- un module d'observation (201) configuré pour recevoir des paramètres de performances en provenance de l'AP (100) et des STA (101, 102, 103) ; et
- un module de calcul (202) configuré pour calculer à partir des paramètres de performances un indicateur d'équité indicatif de la différence entre l'accès au support obtenu pour les trames descendantes et les trames montantes ; et
- un module d'attribution (203) configuré pour modifier les paramètres d'accès au support des STA (101, 102, 103) et/ou de l'AP (100) en fonction de l'indicateur d'équité.

2. Dispositif (200) selon la revendication 1, dans lequel les paramètres de performances sont indicatifs de la quantité de trames envoyées et reçues par les STA (101, 102, 103) et l'AP (100).

**3.** Dispositif (200) selon la revendication 2, dans lequel l'indicateur d'équité est indicatif de la différence entre la quantité de trames éliminées par l'AP (100) par rapport à la quantité de trames envoyées par l'AP (100) et une quantité moyenne de trames éliminées par les STA par rapport à une quantité moyenne de trames envoyées par les STA (101, 102, 103).

**4.** Dispositif (200) selon la revendication 1, dans lequel les paramètres d'accès au support comprennent une longueur d'une fenêtre de contention, CW, d'un STA (101, 102, 103) et/ou d'un AP (100).

**5.** Dispositif (200) selon la revendication 4, dans lequel le module de calcul (201) est en outre configuré pour calculer un minimum et un maximum pour la longueur de la fenêtre de contention, CW, d'un STA (101, 102, 103) et/ou d'un AP (100).

**6.** Dispositif (200) selon la revendication 5, dans lequel la longueur minimale d'une CW est basée sur une valeur minimale par défaut de la CW et sur un indicateur d'équité.

**7.** Dispositif (200) selon la revendication 5, dans lequel la longueur maximale d'une CW est basée sur la fenêtre de contention minimale de l'AP (100).

**8.** Procédé de gestion de l'accès à un support d'un point d'accès, AP, et de dispositifs associés, STA, dans un réseau sans fil, le procédé comprenant :

- la réception (301) de paramètres de performances en provenance de l'AP et des STA ; et
- le calcul (302, 303, 304) à partir des paramètres de performances d'un indicateur d'équité indicatif de la différence entre l'accès au support obtenu pour les trames descendantes et les trames montantes ; et
- la modification (404) des paramètres d'accès au support des STA et/ou de l'AP en fonction de l'indicateur d'équité.

**9.** Produit de programme informatique comprenant des instructions exécutables par ordinateur pour la mise en oeuvre du procédé selon la revendication 8 lorsque le programme est exécuté sur un ordinateur.

**10.** Support de stockage lisible par ordinateur comprenant le produit informatique selon la revendication 9.

Fig. 1

Fig. 2

Fig. 3

Fig. 4

Fig. 5